# EUROPEAN PATENT APPLICATION

(11) **EP 1 431 022 A2**
(43) Date of publication of application: **23.06.2004**
(21) Application number: 03028657.9
(22) Date of filing: 16.12.2003
(51) Int. Cl.: B29D 11/00, C08G 75/06, C08G 75/04, G02B 1/04, C08G 75/08

(54) **Method of producing plastic lens and raw material storage/supply apparatus**

(30) Priority: 18.12.2002 JP 2002366710; 19.12.2002 JP 2002368169; 11.11.2003 JP 2003381276
(71) Applicant: SEIKO EPSON CORPORATION, Shinjuku-ku, Tokyo 163-0811 (JP)
(72) Inventor: Kojima, Kenji, Suwa-shi Nagano-ken 392-8502 (JP); Tonouchi, Kenichi, Suwa-shi Nagano-ken 392-8502 (JP); Saito, Toru, Suwa-shi Nagano-ken 392-8502 (JP)
(74) Representative: Hoffmann, Eckart, Dipl.-Ing.

(57) **Abstract**

A hardenable composition is maintained within a range of -10 to 19°C at blending or storage thereof, and is gelled by a polymerization in an initial polymerization condition of 5 hours or longer at a temperature of 10 ± 9°C and is then hardened by heating to a high temperature. A raw material storage/supply apparatus (1) is formed by supporting, on a movable base (2), a storage container (3) capable of storing a liquid raw material, a temperature regulating pipe (34) for regulating the temperature of the storage container (3), and temperature regulating apparatus (4) capable of regulating a fluid flowing in the temperature regulating pipe (34) at a temperature less than the room temperature.

## Description

The present invention relates to a method of producing a plastic lens, capable of producing a plastic lens with a satisfactory yield by a cast polymerization method with a raw material of a high refractive index having a high polymerization reactivity. The invention also relates to a raw material storage/supply apparatus adapted for storing such raw material of a high refractive index and casting it into a mold.

A plastic lens, being lighter and less breakable in comparison with a glass lens, is widely employed recently for eyeglass lenses such as an eyesight correcting lens and a sunglasses lens. Required properties of an optical material, particularly for an eyeglass lens, include a high refractive index and a high Abbe's number as optical properties, and a high heat resistance and a high strength as physical properties. The high refractive index enables a thinner lens while a high Abbe's number reduces a color aberration of a lens, and the high heat resistance and the high strength are important in facilitating a secondary working such as polishing, and are also important from the standpoint of safety.

The demand for lighter and thinner plastic lenses has been increasing recently, and optical materials having a higher refractive index than in the prior art materials are being actively developed. As a material of a high refractive index in the prior art, there has been proposed for example a thermosettable optical material having a thiourethane structure obtained by a reaction of a polythiol compound and a polyisocyanate compound. Recently, there has been proposed a compound having two or more episulfide groups in the molecule, as shown in the documents JP-A-9-110979, JP-A-9-255781 and JP-A-10-298287. Also a compound having one or more disulfide bonds (S-S) in the molecule and also having an epoxy and/or a thioepoxy group (hereinafter called a disulfideepoxy compound) is proposed in the document JP-A No. 11-322930. A resin obtained by polymerization hardening of a compound having an episulfide group or a disulfideepoxy compound described in these references has a refractive index even higher than that of the thiourethane resin considered as a high refractive index material in the prior art, and, though the Abbe's number tends to lower with an increase in the refractive index, such resin realizes an Abbe's number almost comparable to that of the thiourethane resin, thus being a material excellent in the optical performance.

However, the compound having an episulfide group or the disulfideepoxy compound, though being excellent in the optical performance, has a drawback in manufacture, as a raw material of the plastic lens. For producing an eyeglass plastic lens, there is generally employed a cast polymerization method of charging a hardenable composition of a raw material into a mold formed by two glass molds supported by a gasket or a tape, and executing a thermal polymerization to form a lens. The hardenable composition employed for cast polymerization of plastic lenses is prepared by blending a monomer compound with a hardening catalyst and other components in a raw material blending tank. The blended hardenable composition is charged from the raw material blending tank into a storage container of a raw material storage/supply apparatus formed by mounting a storage container on a carrying cart. The raw material storage/supply apparatus is then transported to a work site for casting into the mold and the hardenable composition is cast from the storage container into the mold.

At the heat polymerization of the hardenable composition charged from the storage container into the mold, the mold is placed in an atmospheric polymerization oven, a gelation is executed for 10 hours at a temperature of the polymerization oven of, for example, 30°C, and the polymerizable composition in the mold is hardened under a temperature condition of elevating the temperature to a hardening temperature of 120°C over 9 hours, then maintaining this temperature for 2 hours and lowering the temperature to 60°C over 2 hours. Then the hardened resin is taken out from the glass molds to obtain a plastic lens.

However the compound having an episulfide group or the disulfideepoxy compound, in case of being polymerized under a temperature condition same as that for the prior art polymerizable compound, encounters a drawback of often generating optical strain in the obtained plastic lens, particularly in case of forming a thick lens, whereby the yield is lowered.

The present invention has been made in consideration of the aforementioned drawback and has a first object of providing a method of producing a plastic lens, capable of polymerizing a polymerizable composition including a compound having an episulfide group or a disulfideepoxy compound while suppressing the generation of optical strain as far as possible, thereby producing plastic lenses with a satisfactory yield.

A polymerizable composition including a compound having an episulfide group or a disulfideepoxy compound has a relatively high reactivity and the polymerization reaction may proceed promptly after the addition of a hardening catalyst, even at 21 °C. For this reason, in order to safely store the polymerizable composition and charge it into the mold, it is necessary to cool the storage container in the raw material storage/supply apparatus thereby eliminating the heat of polymerization. For cooling the raw material storage/supply apparatus, there has been employed a method of providing a cooling jacket covering the storage container, also providing, in a building, a cooling water pipe for supplying cooling water from a large-sized cooling water supply apparatus and supplying cooling water from such cooling water pipe to the cooling jacket of the raw material storage/supply apparatus. Such cooling method has a high energy efficiency, because the cooling water is supplied in concentrated manner from the cooling water supply apparatus. However, because of a recent rapid progress toward a higher refractive index in the plastic lenses, there are being supplied raw materials of various types including the compound having an episulfide group or the disulfideepoxy compound. Temperature of cooled storage is variable depending on the type of the raw material, and the prior art system of concentrated supply of the cooling water from the cooling water supply apparatus is becoming unable to cope with such situation.

The present invention has also been made in consideration of the aforementioned situation, and has a second object of providing a raw material storage/supply apparatus suitable for storage and casting of the compound having an episulfide group and the disulfideepoxy compound mentioned above and capable of adapting to various kinds of raw material for the plastic lenses.

These objects are achieved by a method as claimed in claims 1 and 4, and an apparatus as claimed in claim 7, respectively. Preferred embodiments of the invention are subject-matter of the dependent claims.

In a raw material storage/supply apparatus with a large volume for storing the polymerizable composition, it is necessary to remove the heat of polymerization because the heat is difficult to dissipate, but, in case of polymerization with a small mold, the heat of polymerization is considered easily removable, and, for improving the productivity, a heating to 21°C or higher has been employed. However, by storing the polymerizable composition including the compound having an episulfide group and the disulfideepoxy compound at a temperature condition less than 21°C, thereby suppressing the polymerization reaction in a stage prior to casting into the mold, and also by employing a temperature of an initial polymerization lower than in the prior art technology and maintaining a temperature of 10 ± 9°C for at least 5 hours, thereby suppressing a local polymerization and enabling uniform polymerization, it is possible to conspicuously suppress the generation of optical strain and to produce plastic lenses with a satisfactory yield.

Use of a portable storage container as a container for storage and casting of the polymerizable composition at a regulated temperature of less than 21°C allows to suppress the progress of polymerization of the polymerizable composition and to enable a uniform polymerization even in a transfer step from the blending tank for blending the hardenable composition to the mold, thereby suppressing the generation of the optical strain.

A blending under cooling allows to suppress the polymerization reaction even from the blending stage, thereby enabling to achieve a uniform polymerization and to suppress generation of the optical strain.

In the prior art temperature condition in which the polymerizable composition including the compound having the episulfide group or the disulfideepoxy compound is gelled at a temperature higher than 21°C in the initial polymerization stage and is heated to a higher temperature, it is estimated that the polymerization reaction proceeds rapidly in the initial polymerization stage in a part to generate heat in such part thereby further promoting the polymerization, thus resulting in an uneven polymerization reaction and leading to optical strain. Therefore, by employing a temperature of the initial polymerization lower than that in the prior art and maintaining a temperature range of 10 ± 9°C for at least 5 hours, it is rendered possible to suppress a local polymerization and to achieve uniform polymerization, thereby evidently suppressing generation of optical strain and producing a plastic lens with a satisfactory yield.

Optical strain is generated conspicuously when molding a plastic lens in a mold having a minimum cavity thickness of 5 mm or larger. It is conceived that the heat of polymerization is difficult to dissipate in such case. Therefore, the temperature condition mentioned above can improve a yield of a thick plastic lens.

A temperature condition maintaining a temperature of 125 to 140°C for 0.5 hours or longer allows to minimize a change in diopter at an annealing treatment after the hardening.

The raw material storage/supply apparatus according to the invention incorporates a temperature regulating apparatus capable of cooling to a temperature lower than 21°C and is capable of supplying a fluid temperature controlled therein to a temperature regulating pipe thereby regulating the raw material in a storage containing at a temperature of less than 21 °C. Because of the ability of storage at a low temperature, a highly reactive raw material such as a polymerizable composition including a compound having an episulfide group or a disulfideepoxy compound can be stored while suppressing polymerization.

Also, since an independent temperature control is possible for the raw material, it is possible to store and supply a raw material at an appropriate temperature, for the raw materials of different storage temperatures in respective raw material storage/supply apparatuses. It can therefore adapt to various the raw materials.

Furthermore, since such apparatus is installed on a movable base, it is possible to maintain a temperature of less than 21°C even during a transfer from the blending tank for blending the hardenable composition to a site for casting into the mold, thereby suppressing the progress of the polymerization of the polymerizable composition and suppressing generation of optical strain.

A polymerizable composition including a compound having an episulfide group or a disulfideepoxy compound, after an addition of a hardening catalyst, may cause a rapid proceeding of a polymerization reaction even in a storage under a low temperature, thereby generating heat and toxic gas. For this reason, it is preferable to constantly monitor the temperature of the raw material with temperature detection means and to call attention by an alarm generation by alarm means in case a predetermined temperature is exceeded. Recent hardenable compositions providing a high refractive index have a high reactivity and tend to generate toxic gasses by a temperature increase, so that different alarms of two stages or more depending on the temperature of the raw material enable appropriate measures according to such stages.

Since the raw material for the plastic lens is sensitive to an impurity, it is preferable not to employ a transfer through a pump but to pressurize the interior of the storage container by a pressurized gas and to press out the raw material to the exterior of the container by such pressure through the raw material supply pipe.

An agitation achieves a more uniform temperature in the hardenable composition, thereby suppressing a local progress of the polymerization.

In the following, embodiments of the method and the apparatus according to the present invention will be explained in detail with reference to the accompanying drawings, but the invention is not limited to such embodiments.
- Fig. 1: (a) to (e) illustrate a flow chart of steps of producing a plastic lens by a cast polymerization method.
- Fig. 2: Is a view showing a raw material storage/supply apparatus of the invention, wherein (a) is a plan view, and (b) is a lateral view.

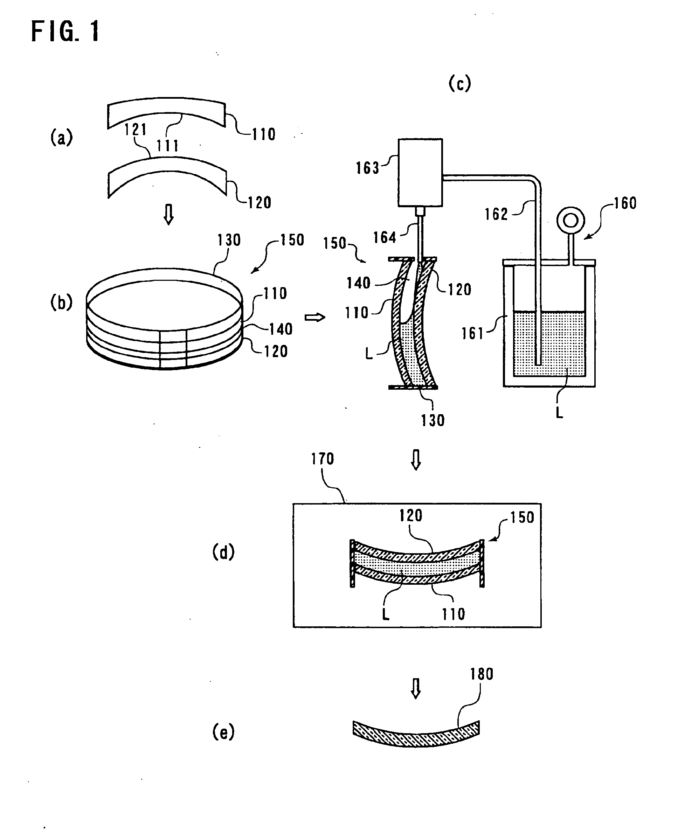

Fig. 1 is a flow chart showing steps of producing a plastic lens by a cast polymerization method. As shown in Fig. 1(a), there are prepared a concave mold part 110 having a concave molding surface 111 for forming a convex lens surface, and a convex mold part 120 having a convex molding surface 121 for forming a concave lens surface, respectively washed. Then, as shown in Fig. 1(b), the surface 111 and the surface 121 are made to be opposed, and an adhesive tape 130 is wound around the periphery of the mold parts 110, 120 to seal a cavity between them, thereby assembling a mold 150.

On the other hand, a hardenable composition is prepared by blending a monomer compound with a hardening catalyst and other components in an raw material blending tank (not shown). As shown in Fig. 1 (c), the prepared hardenable composition L is supplied from the raw material blending tank to a storage container 161, constituting a pressurized container of a raw material storage/supply apparatus 160. The raw material storage/supply apparatus 160 is transported to a location for casting into the mold, and there is conducted a casting step of introducing a pressurized gas into the storage container 161 to press out the hardenable composition L therein through a casting pipe 162 and a valve 163 and from a casting nozzle 164 into the cavity 140 of the assembled mold 150.

Then, as shown in Fig. 1 (d), the mold 150 is placed in a thermostat chamber 170, and is subjected to a hardening step in which the mold 150 is exposed to a predetermined temperature for a predetermined time, thereby polymerizing and hardening the hardenable composition in the mold.

Finally, as shown in Fig. 1 (e), the mold parts 110, 120 are opened and the hardened plastic lens is taken out as a plastic lens 180.

The method according to the invention employs, as a monomer compound constituting a principal component of the hardenable composition, (1) a compound having two or more episulfide groups in a molecule and/or (2) a compound having one or more disulfide bonds (S-S) in a molecule and further having an epoxy group and/or a thioepoxy group (disulfideepoxy compound). A resin obtained by polymerizing a compound having two or more episulfide groups in a molecule or (2) a compound having one or more disulfide bonds (S-S) in a molecule and further having an epoxy group and/or a thioepoxy group provides a refractive index higher than that in the prior art and still realizes an Abbe's number comparable to that of the prior art resin, thus constituting a material with excellent optical performance.

On the other hand, such monomer compound is difficult to handle, as it has a high reactivity and causes a polymerization reaction with generation of a toxic gas even at 21°C. Also, it is associated with the drawback of often generating an optical strain in a hardened article. The method according to the invention includes a casting step of casting a polymerizable composition containing (1) a compound having episulfide groups in the molecule and/or (2) a disulfide epoxy compound adjusted to a temperature less than 21°C, into a mold, and a hardening step of exposing the mold to a temperature condition of 10 ± 9°C for 5 hours or more thereby polymerizing the polymerizable composition. An episulfide group is represented by a following formula (1): 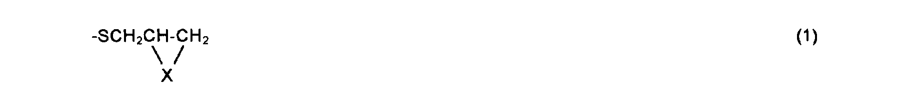 wherein X represents a sulfur atom or an oxygen atom. In case sulfur atoms at respective ends of two episulfide groups are mutually bonded, there is formed a compound having one or more disulfide bonds (S-S) in the molecule and further having and an epoxy group and/or a thioepoxy group.

Examples of the compound having two or more episulfide groups in the molecule include a linear aliphatic 2,3-epithiopropylthio compound such as
1,2-bis(2,3-epithiopropylthio)ethane,
1,2-bis(2,3-epithiopropylthio)propane,
1,3-bis(2,3-epithiopropylthio)propane,
1,3-bis(2,3-epithiopropylthio)-2-methylpropane,
1,4-bis(2,3-epithiopropylthio)butane,
1,4-bis(2,3-epithiopropylthio)-2-methylbutane,
1,3-bis(2,3-epithiopropylthio)butane,
1,5-bis(2,3-epithiopropylthio)pentane,
1,5-bis(2,3-epithiopropylthio)-2-methylpentane,
1,5-bis(2,3-epithiopropylthio)-3-thiapentane,
1,6-bis(2,3-epithiopropylthio)hexane,
1,6-bis(2,3-epithiopropylthio)-2-methylhexane,
1,8-bis(2,3-epithiopropylthio)-3,6-dithiaoctane,
1,2,3-tris(2,3-epithiopropylthio)propane,
2,2-bis(2,3-epithiopropylthio)-1,3-bis(2,3-epithiopropylthiomethyl)propane,
2,2-bis(2,3-epithiopropylthiomethyl)-1-(2,3-epithiopropylthio)butane,
1,5-bis(2,3-epithiopropylthio)-2-(2,3-epithiopropylthiomethyl)-3-thiapentane,
1,5-bis(2,3-epithiopropylthio)-2,4-bis(2,3-epithiopropylthiomethyl)-3-thiapentane,
1-(2,3-epithiopropylthio)-2,2-bis(2,3-epithiopropylthiomethyl)-4-thiahexane,
1,5,6-tris(2,3-epithiopropylthio)-4-(2,3-epithiopropylthiomethyl)-3-thiahexane,
1,8-bis(2,3-epithiopropylthio)-4-(2,3-epithiopropylthiomethyl)-3,6-dithiaoctane,
1,8-bis(2,3-epithiopropylthio)-4,4-bis(2,3-epithiopropylthiomethyl)-3,6-dithiaoctane,
1,8-bis(2,3-epithiopropylthio)-2,5-bis(2,3-epithiopropylthiomethyl)-3,6-dithiaoctane,
1,8-bis(2,3-epithiopropylthio)-2,4,5-tris(2,3-epithiopropylthiomethyl)-3,6-dithiaoctane,
1,1,1-tris{[2-(2,3-epithiopropylthio)ethyl]thiomethyl}-2-(2,3-eplthiopropylthio)ethane,
1,1,2,2-tetraquis{[2-(2,3-epithiopropylthio)ethyl]thiomethyl}ethane,
1,11-bis(2,3-epithiopropylthio)-4,8-bis(2,3-epithiopropylthiomethyl)-3,6,9-trithiaundecane,
1,11-bis(2,3-epithiopropylthio)-4,7-bis(2,3-epithiopropylthiomethyl)-3,6-9-trithiaundecane,
or
1,11-bis(2,3-epithiopropylthio)-5,7-bis(2,3-epithiopropylthiomethyl)-3,6,9-trithiaundecane;
an alicyclic 2,3-epithiopropylthio such as
1,3-bis(2,3-epithiopropylthio)cyclohexane,
1,3-bis(2,3-epithiopropylthiomethyl)cyclohexane,
1,4-bis(2,3-epithiopropylthiomethyl)cyclohexane,
2,5-bis(2,3-epithiopropylthiomethyl)-1,4-dithiane,
2,5-bis{[2-(2,3-epithiopropylthio)ethyl]thiomethyl}-1,4-dithiane, or
2,5-bis(2,3-epithiopropylthiomethyl) 2,5-dimethyl-1,4-dithiane; and
an aromatic 2,3-epithiopropylthio compound such as
1,2-bis(2,3-epithiopropylthio)benzene,
1,3-bis(2,3-epithiopropylthio)benzene,
1,4-bis(2,3-epithiopropylthio)benzene,
1,2-bis(2,3-epithiopropylthiomethyl)benzene,
1,3-bis(2,3-epithiopropylthiomethyl)benzene,
1,4-bis(2,3-epithiopropylthiomethyl)benzene,
bis[4-(2,3-epithiopropylthio)phenyl]methane,
2,2-bis[4-(2,3-epithiopropylthio)phenyl]propane,
bis[4-(2,3-epithiopropylthio)phenyl] sulfide,
bis[4-(2,3-epithiopropylthio)phenyl]sulfone, or
4,4'-bis(2,3-epithiopropylthio)biphenyl.

Each of these compounds may be employed alone or in a combination of two or more of them.

Examples of the compound having one or more disulfide bonds (S-S) in the molecule and further having and an epoxy group and/or a thioepoxy group include a (thio)epoxy compound having a disulfide bond in the molecule such as
bis(2,3-epoxypropyl)disulfide or
bis(2,3-epithiopropyl)disulfide, and
a (thio)epoxy compound having two or more disulfide bonds in the molecule such as
bis(2,3-epithiopropyldithio)methane,
bis(2,3-epithiopropyldithio)ethane,
bis(6,7-epithio-3,4-dithiaheptan)sulfide,
1,4-dithian-2,5-bis(2,3-epithiopropyldithiomethyl),
1,3-bis(2,3-epithiopropyleithiomethyl)benzene,
1,6-bis(2,3-epithiopropyldithiomethyl)-2-(2,3-epithiopropyldithioethylthio)-4-thiahexane or
1,2,3-tris(2,3-epithiopropyldithio)propane.

Each of these compounds may be employed singly or in a combination of two or more of them.

In the invention, it is possible to employ, as a monomer compound, either one of the compound having two or more episulfide groups in the molecule and the disulfideepoxy compound, and also to employ both in combination. In the polymerizable composition of the invention including the compound having two or more episulfide groups in the molecule or the disulfideepoxy compound, a resin modifying agent may be added for improving the resin, principally for adjusting optical properties such as the refractive index of the obtained resin, or regulating physical properties such as the impact resistance or the specific gravity, or for adjusting the viscosity and other handling properties of the monomer. Examples of the resin modifying agent include an aforementioned compound having two or more episulfide groups in the molecule, a thiol compound, a mercapto organic acid, an organic acid and anhydride, an amino acid, a mercaptoamine, an amine and an olefin including a (meth)acrylate. Each such resin modifying agent may be employed alone or in a mixture of two or more of them.

As a hardening catalyst, there is usually employed a tertiary amine, a phosphine, a Lewis acid, a radical polymerization catalyst or a cationic polymerization catalyst. Also, if necessary, various materials can be added such as a chain extending agent, a crosslinking agent, a photostabilizer, an ultraviolet absorber, an antioxidant, an anticoloration agent, a dye, a filler or an internal releasing agent.

A blending step of blending a polymerizable composition including the compound having two or more episulfide groups in the molecule and/or the disulfideepoxy compound, the hardening catalyst and other components is executed in a blending tank (not shown). In order to suppress the polymerization of the hardenable composition having a high polymerization reactivity, it is preferable that the blending tank is provided with a facility capable of cooling the hardenable composition therein, and that the polymerizable composition is blended under a temperature of less than 21°C in the blending step. The temperature condition of the blending step is preferably within the range of -30 to 20°C, particularly -10 to 19°C. In this manner it is possible to suppress the polymerization reaction from the blending stage and to enable uniform polymerization in the mold.

The according to the invention includes a casting step of regulating the temperature of the blended polymerizable composition to less than 21 °C and filling it in the mold. Regulation of the temperature of the hardenable composition to less than 21°C can be achieved by storing the composition in a storage container 161 whose temperature is controllable to a temperature of less than 21°C. For adopting a temperature condition within the range of -30 to 20°C, particularly -10 to 19°C for storage, it is possible to remove the heat of polymerization, thereby preventing a rapid progress of the polymerization reaction.

As a raw material storage/supply apparatus having a portable storage container having such function and being capable of a casting operation, a raw material storage/supply apparatus of the invention to be explained later can be advantageously employed.

As a mold, there is employed the mold 150 constituted of two glass mold parts whose circumferential or lateral faces are supported by a tape as shown in Fig. 1(b), or a mold whose lateral faces are supported by a gasket. In the casting step, at first a lower hole is formed at a predetermined position of the adhesive tape 130, and a casting nozzle 164 is inserted into the lower hole. Since the mold 150 for forming a convex lens has a narrow gap between two mold parts 110, 120 on an external periphery, there is employed a casting nozzle 164 with a very fine tip for enabling insertion into such gap. A pressurized gas is introduced into the storage container 161 to push out the hardenable composition filled therein to the casting nozzle for casting through the pipe 162 and the valve 163.

The casting is terminated by closing the valve 163 upon detection that the interior of the cavity 140 is filled with the hardenable composition, and a casting aperture is sealed.

The method according to the invention has a hardening step of hardening the polymerizable composition filled in the mold by exposing the mold to a predetermined temperature condition, as explained in the foregoing. A polymerization molding of a plastic lens includes a case of producing a finished lens in which two faces of the lens are finished to predetermined optical surfaces by a transfer from the mold, and a case of producing a semi-finished lens in which a face is finished to an optical surface by a transfer from the mold while a face at the opposite side is to be scraped to an optical surface by a polishing work. A finished lens is generally thin, and has a minimum thickness of about 1 mm either in a convex lens or a concave lens. On the other hand, a semi-finished lens is thicker with a minimum thickness of about 5 to 20 mm either in a convex lens or a concave lens.

In case of producing a thin finished lens by hardening a polymerizable composition containing a compound having two or more episulfide groups in a molecule or a disulfideepoxy compound, the atmosphere may have a temperature condition same as that in the prior art technology. However, in case of producing a semi-finished lens with a minimum thickness of 5 mm or larger by hardening a polymerizable composition containing a compound having two or more episulfide groups in a molecule or a disulfideepoxy compound, the temperature condition of the prior art technology results in optical strain, thus deteriorating the yield. In case of forming a semi-finished lens, it is estimated that, because of a large gap between the molds, the heat of polymerization is not sufficiently dissipated to the exterior and the temperature of the polymerizable composition is elevated by the heat of polymerization, whereby the polymerization reaction locally proceeds rapidly and such rapid proceeding of the polymerization induces a further temperature increase by the heat of polymerization. As a result, the polymerization becomes uneven to induce an optical strain.

In a finished lens, optical strain may be generated in case of a thick lens. Therefore, in the method according to the invention, as a polymerizing temperature condition for the polymerizable composition, a temperature of 10 ± 9°C, preferably 10 ± 5°C and most preferably 10 ± 2°C is maintained for 5 hours or more, preferably 50 hours or less and most preferably 8 to 20 hours in an initial stage of the polymerization, thereby gelling the polymerizable composition. A gelation attained by the polymerization reaction in such temperature condition for initial polymerization of a low temperature allows to suppress generation of the optical strain, thereby improving the yield. An initial polymerization temperature, lower than the aforementioned temperature, is disadvantageous in manufacture because of an excessively long time required for gelation. On the other hand, an excessively high initial polymerization temperature tends to generate the optical strain. On the other hand, an extension in the initial polymerization time may not be desirable in the production efficiency, as the polymerization reaction may scarcely proceed further. It is usual to utilize a constant temperature within the aforementioned temperature range, but it is also possible to vary the temperature within the aforementioned temperature range. Such regulation of the polymerization temperature is executed, for example, by placing the mold in a polymerization oven capable of cooling and heating, and regulating the atmospheric temperature in the polymerization oven.

After the polymerizable composition is gelled in such initial polymerization temperature condition, it is heated from the initial polymerization temperature to a maximum temperature of polymerization in order to almost completely harden the polymerizable composition. The maximum temperature of polymerization, in case of a polymerizable composition containing a compound having two or more episulfide groups in a molecule or a disulfide epoxy compound, is preferably 125 to 140°C. With a maximum temperature of polymerization less than 125°C, the diopters of the lens may not be stabilized by a single annealing after the polymerization and may show a continued change by a subsequent heat treatment. A negative lens, for example, may show a continued change toward a stronger negative diopter side under repeated annealings of 130°C x 2 hours. Also raw material sticking to the mold may not be hardened even after the polymerization, thus causing a disagreeable odor or causing a stain on fingers of an operator. On the other hand, with a maximum temperature of polymerization higher than 140°C, the lens may show a strong yellowish color after the polymerization and may become unusable as an eyeglass lens for which a colorless transparent lens is desired.

The temperature elevating time from the initial polymerization temperature to the maximum temperature can be 2 to 20 hours. The time of maintaining the maximum temperature is preferably 0.5 hours or longer, particularly preferably 1 to 10 hours. A time less than 0.5 hours may be insufficient for stabilizing the lens diopters or hardening the leaking monomer, even if the maximum temperature of polymerization is within the range of 125 to 140°C. Also a time exceeding 10 hours may result in a yellowish tone of the lens after polymerization, even in case the maximum temperature of polymerization does not exceed 140°C.

The polymerized plastic lens is taken out from the mold at a temperature of, for example, 100°C or less, preferably 70°C or less, and the temperature decreasing time from the maximum temperature of polymerization is about 1 to 5 hours but can be made to about 1 hour by a forced cooling.

As a standard polymerization condition, there is adopted a condition of a total polymerization time of 19 to 26 hours by maintaining a temperature of 10 ± 2°C for 10 to 15 hours, then elevating the temperature to about 130°C in about 5 to 7 hours, maintaining a temperature of about 130°C for 1 to 3 hours, and executing a forced cooling in about 1 to 2 hours.

An initial polymerization temperature lower than in the prior art technology does not deteriorate the productivity since the total polymerization time is comparable to that in the prior art technology and there is not required a long polymerization time. A plastic lens can be obtained by taking out the mold from the polymerization oven and taking out the hardened plastic lens by disassembling the mold. An annealing process by re-heating the plastic lens taken out from the mold is a preferred process for stabilizing the lens diopters and for eliminating optical strain of the lens. The process temperature in such operation is 70 to 160°C, preferably 80 to 140°C. The process time is 10 minutes to 6 hours, preferably 1 to 3 hours.

In case the polymerized plastic lens is a finished lens, a final plastic lens is obtained through process steps such as a dyeing, a formation of a hard coating film, a formation of an antireflection film etc. if necessary. In case the polymerized plastic lens is a semi-finished lens, there is executed a polishing step of polishing a surface to a predetermined optical surface. After the polishing step, a final plastic lens is obtained through process steps such as a dyeing, a formation of a hard coating film, a formation of an antireflection film etc. if necessary.

In the following, there will be explained examples of the present invention.

### Example 1

As raw materials of the lens, 90 g of bis-(2,3-epithiopropyl)disulfide and 10 g of 4, 8 or 4, 7 or 5, 7-dimercaptomethyl-1,11-dimercapto-3,6,9-trithiaundecane were mixed, then added with 1.0 g of 2-(2-hydroxy-5-methylphenyl)-2H-benzotriazole (trade name Sisorp 701, manufactured by Sipro Kasei Co.) as an ultraviolet absorber and sufficiently agitated for complete dissolution. Then 0.02 g of N,N-dimethylcyclohexylamine and 0.10 g of N,N-dicyclohexylmethylamine as catalysts were added, and the mixture was sufficiently agitated under a temperature of 19°C to obtain a uniform liquid.

Then this polymerizable composition was cast into a glass mold having a gap of 10 mm between two glass mold parts. The mold was placed in an atmospheric polymerization oven, and a polymerization hardening was executed by maintaining an initial polymerization temperature of 10°C for 10 hours, then elevating the temperature from 10°C to 130°C over 5 hours, maintaining 130°C for 2 hours and lowering the temperature to 60°C over 2 hours. The total polymerization time was 19 hours.

Thereafter the lens was separated from the glass mold and subjected to an annealing process by heating for 2 hours at 130°C. The obtained plastic lens was visually inspected for optical strain under a mercury lamp irradiation. As a result, the production yield was 90 %.

### Comparative Example

A polymerizable composition same as in Example 1 was prepared and was cast in a same mold. The mold was placed in an atmospheric polymerization oven, and a polymerization hardening was executed by maintaining an initial polymerization temperature of 30°C for 10 hours, then elevating the temperature from 30°C to 130°C over 9 hours, maintaining 130°C for 2 hours and lowering the temperature to 60°C over 2 hours. The total polymerization time was 24 hours. Thereafter the lens was separated from the glass mold and subjected to an annealing process by heating for 2 hours at 130°C. The obtained plastic lens was visually inspected for optical strain under a mercury lamp irradiation. As a result, the production yield was 50 %.

### Example 2

A polymerizable composition was prepared, cast in a mold, hardened, annealed and subjected to an inspection for optical strain in the same manner as in Example 1 except that the initial polymerization temperature condition was 15 hours at 10°C. As a result, the production yield was 90 %.

### Example 3

A polymerizable composition was prepared, cast in a mold, hardened, annealed and subjected to an inspection for optical strain in the same manner as in Example 1 except that the initial polymerization temperature condition was 24 hours at 10°C. As a result, the production yield was 90 %.

### Example 4

A polymerizable composition was prepared, cast in a mold, hardened, annealed and subjected to an inspection for optical strain in the same manner as in Example 1 except that the initial polymerization temperature condition was 48 hours at 10°C. As a result, the production yield was 90 %.

### Example 5

A polymerizable composition was prepared, cast in a mold, hardened, annealed and subjected to an inspection for optical strain in the same manner as in Example 1 except that the initial polymerization temperature condition was 6 hours at 10°C. As a result, the production yield was 80 %.

From these results, it is concluded that the gelation takes place in about 10 hours in case of executing the initial polymerization at 10°C.

### Comparative Example 2

A polymerizable composition was prepared, cast in a mold, hardened, annealed and subjected to an inspection for optical strain in the same manner as in Example 1 except that the initial polymerization temperature condition was 15 hours at 0°C. As a result, the production yield was 50 %.

### Comparative Example 3

A polymerizable composition was prepared, cast in a mold, hardened, annealed and subjected to an inspection for optical strain in the same manner as in Example 1 except that the initial polymerization temperature condition was 48 hours at 0°C. As a result, the production yield was 90 %.

These results indicate that an initial polymerization temperature of 0°C requires an extremely long polymerization time which is not practical.

### Comparative Example 4

A polymerizable composition was prepared, cast in a mold, hardened, annealed and subjected to an inspection for optical strain in the same manner as in Comparative Example 1 except that the initial polymerization temperature condition was 10 hours at 20°C. As a result, the production yield was 70 %.

### Comparative Example 5

A polymerizable composition was prepared, cast in a mold, hardened, annealed and subjected to an inspection for optical strain in the same manner as in Comparative Example 1 except that the initial polymerization temperature condition was 5 hours at 40°C. As a result, the production yield was 40 %.

### Comparative Example 6

A polymerizable composition was prepared, cast in a mold, hardened, annealed and subjected to an inspection for optical strain in the same manner as in Comparative Example 1 except that the initial polymerization temperature condition was 3 hours at 10°C. As a result, the production yield was 50 %.

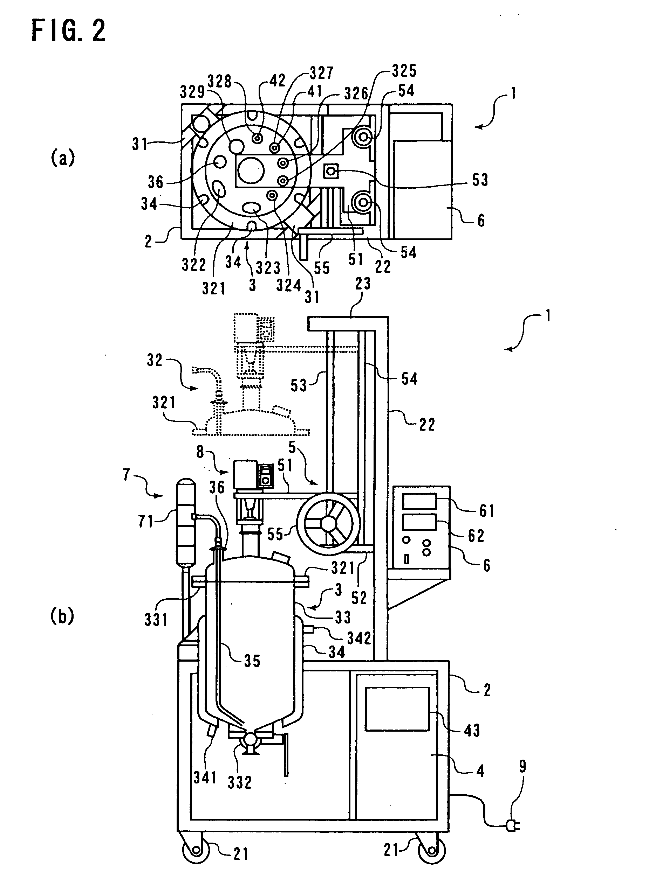

In the following there will be explained a raw material storage/supply apparatus of the invention for attaining the second object, with reference to Fig. 2.

Fig. 2 shows an embodiment of the raw material storage/supply apparatus of the invention, wherein (a) is a schematic plan view and (b) is a schematic lateral view. A part of the drawings is shown in a see-through state for facilitating understanding. The raw material storage/supply apparatus 1 has a base 2 assembled in a rectangular box shape with iron frames of an L-shaped cross section. Casters 21 are provided on four corners of a lower surface of the base 2 to render the base 2 movable. A storage container 3 is fixed, by two mounting portions 31 adjoined to an outer surface thereof, to an upper iron frame of the base 2.

A temperature regulating apparatus 4 is assembled in the rectangular box-shaped base 2. On the base 2, there is provided a standing pillar 22, on which an elevator apparatus 5 is provided for elevating and lowering a cover member 32 of the storage container 3. On the support 22, a control box 6 is mounted. On an upper surface of the base 2, there is provided a alerting tower 7. The alerting tower 7 is provided with a display unit 71 for flashing, for example, green, yellow and red colors.

The storage container 3 has a cylindrical container body 33 with a constricted bottom portion and an open upper end, and a cover member 32. The container body 33 and the cover member 32 are composed of stainless steel. The cover member 32 and the container body 33 are respectively provided with flanges 321, 331, and can be assembled by mutually tightening the flanges 321, 331 across a packing with combination 34 of bolts and nuts to form a pressure container capable of pressurization of the interior. At the bottom of the container body 33, there is provided a leak valve 332 such as a ball valve, to be employed for example in taking out the raw material from the interior. The container body 33 has a double structure, constituting an external jacket 34 as a temperature regulating pipe in which a temperature regulating fluid flows. The jacket 34 is provided at a bottom portion with an entrance aperture 341 for introducing fluid, and at an upper portion with an exit aperture 342 for discharging the fluid.

At an appropriate center of the cover member 32, an agitating apparatus 8 for example of propeller type protrudes for agitating the raw material. The agitating apparatus 8 is provided with a connecting plate 51 connected with the elevator apparatus 5. The cover member 32 is penetrated at a liquid supply pipe aperture 36 by a liquid supply pipe 35 of which a lower end is positioned close to the bottom of the container body 33 and an upper end is positioned outside the cover member. The liquid supply pipe 35 functions as a raw material supply pipe for supplying the raw materials. The cover member 32 is also provided with a window 322 for observing the interior of the storage container 3, a charging aperture 323 for charging raw materials and a chemical for stopping a runaway state of polymerization, a pressurizing aperture 324 for introducing an external pressurizing gas into the storage container 3, a leak valve 325 for pressure dissipation, a safety valve 326, a first temperature sensor aperture 327 for inserting a first temperature sensor 41 constituting first temperature detection means for detecting the temperature of the raw materials, a second temperature sensor aperture 328 for inserting a second temperature sensor 42 constituting second temperature detection means for detecting the temperature of the raw materials, and a float aperture 329 for inserting a float switch for detecting a liquid surface level of the raw material. Apertures 322 - 329 provided in the cover member 32 are rendered respectively hermetically sealable so as to maintain sealability of the storage container 3.

The elevator apparatus 5 is provided with a support plate 52 protruding horizontally between the pillars 22, and a top plate 23 protruding at the upper end of the pillars 22 in a direction opposed to the support plate 52. Between the support plate 52 and the top plate 23, a threaded shaft 53, having a screw on the external periphery, is vertically provided in a rotatable manner. Also two support shafts 54 are vertically supported between the support plate 52 and the top plate 23. The horizontal connecting plate 51 fixed to the cover member 32 is penetrated by the threaded shaft 53 and the support shafts 54, is also connected to the threaded shaft 53 by a ball screw or the like, and is guided vertically movably by the support shafts 54. On the support plate 52, there is provided a handle 55 for rotating the threaded shaft 53 through bevel gears. A rotation of the handle 55 rotates the threaded shaft 53 through the bevel gears to elevate or lower the connecting plate 51 thereby elevating or lowering the cover member 32 fixed to the connecting plate 51 as indicated by a broken line.

The temperature regulating apparatus 4 incorporates a compression type cooling apparatus (not shown) including a coolant compressor, a condenser, an evaporator etc., and a heater, and also incorporates a pump for supplying a temperature regulating fluid under a pressure. The temperature regulating apparatus 4 is rendered capable of setting the fluid at a predetermined temperature by an operation panel 43, and of feeding the temperature regulating fluid with an arbitrarily regulated temperature within the range of about -10 to 40°C based on temperature information of the raw material detected by the first temperature sensor 41. The temperature regulating apparatus 4 feeds the fluid regulated at an arbitrary temperature into the interior of the jacket 34 through the entrance aperture 341 at the lower part thereof and executes temperature regulation on the fluid discharged from the exit aperture 342 at the upper part of the jacket 34, thereby achieving temperature regulation of the storage container 3 under fluid circulation.

The raw material storage/supply apparatus 1 of the invention is provided with first alarm means and second alarm means in the control box 6. The first alarm means includes a first temperature detection unit for determining the temperature of the raw material from a temperature signal of the raw material detected by the first temperature sensor 41, a first temperature indicator 61 for displaying the temperature determined by the first temperature detection unit, and an upper limit alarm temperature and a lower limit alarm temperature by change, a first temperature setting unit for setting the upper limit alarm temperature and the lower limit alarm temperature, a first judgment unit for judging whether the temperature of the raw material determined by the first temperature detection unit exceeds the alarm temperature preset by the first temperature setting unit, and a first alarm unit. In case the first judgment unit judges that the temperature of the raw material determined by the first temperature detection unit becomes higher than the upper limit alarm temperature or lower than the lower limit alarm temperature set by the first temperature setting unit, the first alarm unit generates an alarm by a buzzer and a flashing display for example of yellow color on the display unit 71 of the alerting tower 7. The second alarm means is independent from the first alarm means, and includes a second temperature detection unit for determining the temperature of the raw material from a temperature signal of the raw material detected by the second temperature sensor 42, a second temperature indicator 62 for displaying the temperature determined by the second temperature detection unit, and a limit temperature by change, a second temperature setting unit for setting a limit temperature beyond which an addition of a chemical such as a polymerization inhibitor to the raw material for suppressing the polymerization thereof occurs, a second judgment unit for judging whether the temperature of the raw material determined by the second temperature detection unit exceeds the limit temperature preset by the second temperature setting unit, and a second alarm unit. In case the second judgment unit judges that the temperature of the raw material determined by the second temperature detection unit exceeds the limit temperature set by the second temperature setting unit, the second alarm unit generates an urgent alarm of a loud sound, and flashes for example of red color in the display unit 71 of the alerting tower 7.

In the control box 6, there is provided a liquid level monitoring unit for processing a signal from the float switch and generating a buzzer sound and flashing green light of the display unit 71 of the alerting tower 7 when the liquid level of the raw material exceeds the lower limit or the upper limit.

The raw material storage/supply apparatus 1 is so constructed as to operate all the apparatuses including the temperature regulating apparatus 4, the alarm means, the agitating apparatus 8 etc. with a power supply of 100 volts and is equipped with a plug 9 for receiving the power supply of 100 volts.

In the following there will be explained a method of use of the raw material storage/supply apparatus 1. This raw material storage/supply apparatus 1 is suitable for storage and supply of, for example, a hardenable composition for a plastic lens. It is particularly suitable for a hardenable composition that has to be stored at a temperature lower than the room temperature, such as the aforementioned hardenable composition including a compound having episulfide groups or a disulfideepoxy compound.

At first the raw material storage/supply apparatus 1, in which the storage container 3 is maintained as a sealed container by fixing the cover member 32 to the container body 33, is moved to a raw material blending tank. The fluid in the jacket 34 is regulated in advanced at a predetermined temperature. The raw material blending tank is also regulated at the predetermined temperature. The charging aperture 323 is opened, and the hardenable composition constituting the raw material is charged from the raw material blending tank into the storage container 3. After charging of a predetermined amount, the charging aperture 323 is closed, and the raw material storage/supply apparatus 1 is moved to a location for casting the raw material into the mold. Then the plug 9 of the apparatus is inserted into a 100 V power supply outlet to operate the temperature regulating apparatus 4, the alarm apparatus and the agitating apparatus 8, and the raw material is maintained at a predetermined temperature under agitation, with a flow of the temperature-controlled fluid in the jacket 34 of the storage container 3. The set temperature of the temperature regulating apparatus 4 is set at an optimum temperature for the storage of the raw material.

In casting the raw material in the mold, a pipe for supplying a pressurized gas such as pressurized air, pressed to a predetermined pressure by a compressor or the like, is connected to a pressurizing aperture 324, and pressurizes the interior of the storage container 3 by the introduction of the pressurized gas. Thus there is executed an operation of casting the hardenable composition from the pressurized storage container into a cavity 140 of the mold 150 through the liquid supply pipe 35, the valve 163 and the casting nozzle 164. The first alarm means and the second alarm means monitor of the temperature of the raw material respectively through the first temperature sensor 41 and the second temperature sensor 42, and display the temperature of the raw material respectively on the first temperature indicator 61 and the second temperature indicator 62. In case the temperature of the raw material becomes higher than the upper limit alarm temperature or lower than the lower limit alarm temperature, the first alarm means generates a buzzer alarm and flashes for example a yellow light on the display unit 71 of the alerting tower 7, thereby notifying the operator with sound and light. The operator elevates or lowers the temperature of the raw material, in such a manner that the temperature of the raw material is located within the range between the upper limit alarm temperature and the lower limit alarm temperature.

In case the temperature of the raw material continues to rise for some reason and the second alarm means judges that the temperature of the raw material exceeds the limit temperature, the second alarm means generates a strong buzzer alarm and flashes for example a red light on the display unit 71 of the alerting tower 7. The operator executes a process of charging a polymerization inhibitor for inhibiting solidification of the raw material into the storage container 3 from the charging aperture 323, thereby terminating runaway of the polymerization of the raw material and preventing solidification thereof.

After the casting into the mold, the power supply to the temperature regulating apparatus 4, the alarm apparatus and the agitating apparatus 8 is cut off, and the remaining raw material is extracted from a drain (leak valve 332) at the bottom of the storage container 3. If necessary, bolts fixing the cover member 32 and the container body 33 are detached, and the cover member 32 is lifted by the elevator apparatus 5 by a rotation of the handle 55, for inspection, washing etc. of the storage container 3.

In this manner the raw material storage/supply apparatus 1 of the present embodiment can arbitrarily set the temperature of the storage container 3 within a temperature range from a low temperature to a temperature equal to or higher than the room temperature, and can store the raw material for the plastic lens at an optimum storage temperature. Since storage at a low temperature is possible, storage can be made under suppression of polymerization even for a raw material of a high reactivity, such as a recent raw material providing a high refractive index, and under a low temperature even during a transfer step from the blending tank to the location of casting step. Also, since it is capable of an independent temperature control of the raw material, raw materials of different storage temperatures can be stored and supplied at appropriate temperatures in the respective raw material storage/supply apparatuses.

It is thus possible to adapt to various raw materials for the plastic lens. Since the raw material storage/supply apparatus of the present embodiment is operable with a power supply of 100 volts and is rendered movable by supporting the entire apparatus including the storage container 3, the temperature regulating apparatus 4, the temperature regulating pipe (jacket) 34 and the alarm means 7 on the base 2, the casting operation can be executed in any location where a power supply of 100 volts and a pipe for pressurized air are available. Also the raw material storage/supply apparatus of the present embodiment, being provided with the first alarm means and the second alarm means which respectively inform that the temperature of the raw material exceeds the upper limit alarm temperature, the lower limit alarm temperature or the limit temperature, can appropriately transmit presence of a toxic gas generated from the raw material or of danger of solidification of the raw material, thereby requesting an appropriate measure.

Since the first alarm means and the second alarm means have separate temperature sensors and control units, one of the means can generate an alarm even in case of a failure in the other, thereby providing a superior safety. Furthermore, the raw material storage/supply apparatus of the present embodiment can minimize the danger of contamination of the raw material with an impurity, since the raw material in the storage container 3 can be supplied in non-contact manner to the exterior through the liquid supply pipe 35 by pressurization with pressurizing means. Also, the raw material storage/supply apparatus of the present embodiment is excellent in operability, since the heavy cover member 32 can be elevated or lowered by the elevator apparatus 5.

The raw material storage/supply apparatus of the present embodiment is not limited to the aforementioned embodiment. For example the temperature regulating pipe formed by a jacket for flowing a temperature regulating fluid on the external periphery of the container, but it is also possible to provide a pipe in the storage container. Also the temperature regulating apparatus has been explained to be of a compression type, but other types may also be employed. Also the alarm means has been explained to generate alarms of two levels, namely a warning and a limit, but there may be generated alarms of three or more levels. Also, there has been explained storage and supply of a raw material for a plastic lens, but it is naturally applicable to other liquid raw materials.

The method of producing a plastic lens of the present invention is applicable to the industry of producing a plastic lens by cast polymerization with a recently developed raw material of a high reactivity and a high refractive index. The raw material storage/supply apparatus of the present invention is applicable, in producing a plastic lens by cast polymerization with a recently developed raw material of a high reactivity and a high refractive index, in a step of storing such raw material and casting it into a mold, and is applicable to an industry of producing a plastic lens.

## Claims

1. A method of producing a plastic lens including
a casting step of filling a polymerizable composition including (1) a compound having two or more episulfide groups in a molecule and/or (2) a compound having one or more disulfide bonds (S-S) in a molecule and further having an epoxy group and/or a thioepoxy group, adjusted to a temperature of less than 21 °C, into a mold (150), and
a hardening step of exposing said mold (150) to a temperature condition of 10 ± 9°C for 5 hours or more thereby polymerizing said polymerizable composition.

2. The method according to claim 1, **characterized in that** said casting step casts the polymerizable composition from a portable storage container storing the polymerizable composition adjusted at a temperature of less than 21 °C to said mold (150).

3. The method according to claim 1 or 2, **characterized by** including a blending step of blending said polymerizable composition under an adjustment at a temperature of less than 21 °C.

4. A method of producing a plastic lens including
a casting step of filling a polymerizable composition including (1) a compound having two or more episulfide groups in a molecule and/or (2) a compound having one or more disulfide bonds (S-S) in a molecule and further having an epoxy group and/or a thioepoxy group into a mold (150), and
a hardening step of exposing said mold (150) to a predetermined temperature condition thereby hardening said polymerizable composition, wherein said temperature condition includes maintaining the temperature of 10 ± 9°C for 5 hours or more in an initial stage of polymerization.

5. The method according to claim 4, **characterized in that** a cavity of said mold (150) into which said polymerizable composition is filled has a minimum thickness of 5 mm or larger.

6. The method according to claim 4, **characterized in that** said temperature condition includes maintaining a temperature of 125 to 140°C for 0.5 hours or more.

7. A raw material storage/supply apparatus **characterized in that** a storage container (3) capable of storing a liquid raw material, a temperature regulating pipe (34) for regulating the temperature of the liquid raw material in said storage container (3), and a temperature regulating apparatus (4) capable of regulating a fluid flowing in said temperature regulating pipe (34) at a temperature of less than 21 °C are supported on a movable base (2).

8. The apparatus according to claim 7, **characterized by** including temperature detection means (41, 42) for detecting the temperature of the liquid raw material in said storage container (3) and alarm means (6) for issuing an alarm in case the temperature detected by said temperature detection means (41, 42) exceeds a predetermined temperature.

9. The apparatus according to claim 8, **characterized in that** said alarm means (6) is adapted to generate respectively different alarms of two stages or more, depending on the detected temperature.

10. The apparatus according to any one of claims 7 to 9, **characterized by** including a pressurizing aperture (324) for introducing a pressurized gas into said storage container (3) and a raw material supply pipe (35) for supplying the liquid raw material, pressurized by the pressurized gas introduced from said pressurizing aperture (324) into said storage container (3), to the exterior of said storage container (3).

11. The apparatus according to any one of claims 7 to 10, **characterized by** including an agitating apparatus (8) for agitating the liquid raw material in said storage container (3).
